# EUROPÄISCHE PATENTANMELDUNG

(11) **EP 1 744 079 A1**
(43) Veröffentlichungstag der Anmeldung: **17.01.2007**
(21) Anmeldenummer: 05015092.9
(22) Anmeldetag: 12.07.2005
(51) Int. Cl.: F16G 13/18

(54) **Rückensteife Kette**

(71) Anmelder: Joh. Winklhofer & Soehne GmbH und Co. KG, 81369 München (DE)
(72) Erfinder: Grabmann, Peter, 86568 Hollenbach (DE); Schlaffer, Robert, 85467 Oberneuching (DE); Teuber, Toralf, 85375 Neufarn (DE)
(74) Vertreter: Grünecker, Kinkeldey, Stockmair & Schwanhäusser Anwaltssozietät

(57) **Zusammenfassung**

Die vorliegende Erfindung betrifft eine rückensteife Kette (1) mit einander abwechselnden Kettengliedern (2,3), die jeweils über ein Kettengelenk (4) miteinander verbunden sind. Jedes Kettengelenk (4) umfasst einen Gelenkbolzen (6) und mindestens eine Gelenköffnung (7,9,10), durch die sich der Gelenkbolzen (6) erstreckt. Jedes zweite Kettenglied (2,3) weist an den Stirnseiten in Kettenlaufrichtung eine mit jeweils einem zweiten Kettenglied (2,3) in Berührung bringbare Abstützkontur (11,12) auf. Die Abstützkontur (11) weist dabei auf der ersten Stirnseite eine Vertiefung und die Abstützkontur (12) auf der zweiten Stirnseite eine in diese Vertiefung (13) passenden Vorsprung (14) auf. An jedem zweiten Kettenglied (2,3) ist mindestens eine der Gelenköffnungen (7,9,10) zum längsverschieblichen Bewegen des Kettenglieds (2,3) als Langloch (10) ausgebildet. Die Vertiefung (13) auf der ersten Stirnseite ist als Steckaufnahme und der Vorsprung (14) an der zweiten Stirnseite als Stecklappen ausgestaltet. Des Weiteren bezieht sich die Erfindung auf einen rückensteifen Kettenantrieb zum Antrieb von automatisierten Tor- oder Türantrieb mit einer rückensteifen Kette (1) und einem Kettenrad (24) zum Antrieb der Kette (1).

## Beschreibung

Die vorliegende Erfindung betrifft eine rückensteife Kette mit einander abwechselnden Kettengliedern, die jeweils über ein Kettengelenk miteinander verbunden sind, jedes Kettengelenk umfasst einen Gelenkbolzen und mindestens eine Gelenköffnung, durch die sich der Gelenkbolzen erstreckt, jedes zweite Kettenglied weist an den Stirnseiten in Kettenlaufrichtung eine mit jeweils einem zweiten Kettenglied in Berührung bringbare Abstützkontur auf, wobei die Abstützkontur der ersten Stirnseite eine Vertiefung und die Abstützkontur der zweiten Stirnseite einen in diese Vertiefung passenden Vorsprung aufweist.

Eine solche Kette ist beispielsweise bereits in der DE 1 450 699 B1 beschrieben. Diese rückensteife Kette besitzt mehrere Kettenlaschenreihen, die zueinander parallel angeordnet und durch Gelenkbolzen miteinander verbunden sind. An der Innenseite jeder Außenlasche und an der Außenseite jeder Innenlasche ist eine Druckübertragungsplatte vorgesehen, die einen seitlich vorstehenden Ansatz aufweist, dessen Stirnseiten als Anschlagflächen ausgebildet sind, wobei die eine Stirnseite als Vorsprung und die andere Stirnseite zurückversetzt ausgebildet ist. Die vorspringenden und zurückversetzen Stirnseiten der Druckübertragungsplatten sorgen dafür, dass sich die Ketten in einer Richtung versteift, um Druckkräfte übertragen zu können, wohingegen sie in die andere Richtung weiterhin flexibel bleibt. Sobald eine in Richtung des vorstehenden Ansatzes der Druckübertragungsplatte gerichtete Kraft auf die Kette wirkt, ist die Versteifung der Kette gelöst und die Schubübertragung unterbrochen, weshalb derartige Ketten in Führungen laufen müssen, um eine Schubarbeit sicher zu verrichten.

Im Stand der Technik gibt es weiter eine Reihe von sehr unterschiedlichen Konstruktionen, um bei Ketten eine Versteifung zu bewirken. Zum Beispiel ist aus der DE 735 715 eine Gelenkkette bekannt, bei der durch eine halbierte Zylinderhülse, die um einen Kettenbolzen angeordnet ist, und eine nur entsprechende Aussparung in den Laschen eine Beschränkung des Verschwenkens um die Kettengelenke bewirkt wird. Nachteilig ist bei dieser Kettenart, dass mehrere verschiedenartige Laschen und neben dem Gelenkbolzen noch eine halbierte Hülse zum Einsatz kommen, um eine einseitige Versteifungsfunktion herbeizuführen. Auch die Verwendung von bogenförmigen Schlitzen in den Außenlaschen und in diese eingreifende Stifte der Innenlaschen zur Begrenzung der Verschwenkungsfähigkeit sind beispielsweise aus der EP 494 670 A1 bekannt. Diese Druckschrift zeigt darüber hinaus auch eine Begrenzung der Bewegungsfähigkeit durch Außenlaschen, die stirnseitig ineinander greifende Vorsprünge und Vorsprungsaufnahmen aufweisen.

Die Aufgabe der vorliegenden Erfindung ist es, eine rückensteife Kette der eingangs genannten Art bereitzustellen, bei der die Rückenversteifung durch eine möglichst einfache Konstruktion realisiert ist und die Kette zur Schubübertragung im steifen Zustand nicht in einer Führung laufen muss.

Hierzu ist vorgesehen, dass bei jedem zweiten Kettenglied mindestens eine der Gelenköffnungen zum längsverschieblichen Bewegen des Kettengelenks als Langloch ausgebildet ist, und die Vertiefung an der ersten Stirnseite als Steckaufnahme und der Vorsprung an der zweiten Stirnseite als Stecklappen ausgestaltet ist.

Zwar ist bereits aus der US 553,650 eine Kette mit längsverschieblichen Kettenlaschen und einer konturierten Stirnseite bekannt, jedoch beschreibt die US 553,650 im Gegensatz zu den oben beschriebenen Antriebsketten zur Übertragung von Schub- oder Druckkräften zwischen entsprechenden Kettenrädern, eine flexibel auf eine Trommel aufwickelbare Kette, die sich in Längsrichtung versteifen lässt. Eine derartig in Längsrichtung versteifbare Kette wird zur manuellen Reinigung in einen Kesselabgaszug eingeführt, um dort ein Schabeisen oder Abstreicher zu bewegen. Im Gegensatz zu den rücksteifen Antriebsketten, bietet diese Kette keine Möglichkeit für den Eingriff eines Kettenrades. Dabei ist diese Hand-Kette ist aus einer Vielzahl identischer Kettenlaschen zusammengesetzt, wobei nur eine der Stirnseiten in Längsrichtung der Kette eine Versteifungskontur aufweist, während die andere Stirnseite im Wesentlichen gerade ohne eine besondere Kontur verläuft. Darüber hinaus verfügen diese Kettenlaschen eine gegenüber der konturlosen Stirnseite und dem die Kettenlaschen verbindenden Gelenkbolzen zurückversetzte negative Innenkontur, die die konturierte Stirnseite vollständig und zusätzlich auch ein Teil der Seitenkanten aufnimmt. Die aus der US 553,650 bekannte Kette unterscheidet sich sowohl in der Nutzung bzw. den nutzungsbedingten Merkmalen, als auch durch den Aufbau aus identischen Laschen elementar von üblichen rückensteifen Ketten und kann daher für diese auch keine Anregung liefern.

Der Vorteil der erfindungsgemäßen Konstruktion liegt in dem einfachen Aufbau sowie in der flexiblen Verwendung dieser rückensteifen Kette. Weiter ist durch die besondere Ausgestaltung des Kettenglieds die Kette im zusammengeschobenen Zustand in beiden Richtungen senkrecht zur Kettenlaufrichtung steif, wodurch ein sicheres Abstützen der Kette in sich selbst und eine Schubübertragung ohne Führung, z.B. zum Betätigten automatischer Tor- oder Türantriebe, möglich ist. Durch das längsbewegliche Verschieben des Kettenglieds lassen sich die Kettenglieder in eine Arretier- oder Bewegungsstellung bringen, wobei in der Arretierstellung die stirnseitigen Abstützkonturen eng nebeneinander liegen und der Stecklappen in die Steckaufnahme eingreift. Das Eingreifen des Stecklappens in die Steckaufnahme ermöglicht die sichere Versteifung der Kette in beiden Richtungen, während die nebeneinanderliegenden Abstützkonturen ein gutes Weiterleiten auch einer erhöhten Schubkraft ermöglichen. Das Langloch, das sich bevorzugt linear und in Richtung der Längsachse der Kette erstreckt, ermöglicht das längsverschiebliche Bewegen des Kettenglieds und somit die Beweglichkeit der Kette im Zustand.

Des Weiteren kann der Gelenkbolzen an mindestens einer Seite der Kettenglieder zum Eingriff in ein Kettenrad vorstehen. Der gegenüber den Außenseiten der Kettenglieder vorstehende Gelenkbolzen kann für einen einfachen Antrieb der rückensteifen Kette in ein dazu abgestimmtes Kettenrad eingreifen. Darüber hinaus ist es auch möglich, dass der Gelenkbolzen beidseitig über die Kettenglieder übersteht und in ein darauf abgestimmtes aufwändigeres Kettenrad eingreift, wobei ein solches zweiteiliges Kettenrad eine sichere Führung der Kette zwischen den einzelnen Zahnrädern des Kettenrades ermöglicht. Darüber hinaus sind auch Antriebsmöglichkeiten ohne überstehenden Gelenkbolzen realisierbar, beispielsweise in Form einer Rollenkette.

Eine vorteilhafte Ausführungsform sieht vor, dass die sich einander abwechselnden Kettenglieder als Innenkettenglied und Außenkettenglied ausgebildet sind, wobei das Außenkettenglied zwei Außenlaschen und zwei sich durch die Außenlaschen erstreckende Gelenkbolzen umfasst. Durch die schlichte Ausführung der rückensteifen Kette mit Innenkettengliedern und Außenkettengliedern und der einfachen Ausführung des Außenkettenglieds mit Außenlaschen in Standardform und verpressten Gelenkbolzen können Standardkettenbauteile verwendet werden, die auch bei anderen Ketten eingesetzt sind, wodurch sich die Herstellungskosten reduzieren.

Bevorzugt kann dabei das Innenkettenglied mindestens eine Innenlasche umfassen, wobei die Innenlasche die Abstützkontur aufweist und mindestens eine Gelenköffnung der Innenlasche als Langloch ausgebildet ist. Diese besonders einfache Ausgestaltung des Innenkettenglieds ermöglicht durch das Langloch sowohl das längsverschiebliche Bewegen des Kettenglieds als auch durch die Abstützkontur an den Stirnseiten die Arretierfunktion der Kette. Dabei kann die Höhe der Innenlasche senkrecht zur Kettenlängsachse, d.h. der Achse in Richtung der Längserstreckung bzw. der Bewegungsrichtung der Kette, zwischen 20 % und 40 % größer als die Höhe der Außenlasche in Kettenlängsrichtung sein, wobei der Überstand bevorzugt zu beiden Seiten gleich verteilt ist. Durch die Verwendung einer einzigen Innenlasche kann eine besonders schmale rückensteife Kette realisiert werden, die insbesondere in entsprechend engen Einsatzbereichen verwendbar ist.

Eine weitere Ausbildung sieht vor, dass die Abstützkontur einen Abstützabschnitt aufweist, wobei der Abstützabschnitt auf der ersten und zweiten Stirnseite bevorzugt jeweils im Wesentlichen senkrecht zur Achse der rückensteifen Kette angeordnet ist. Derartige Abstützabschnitte ermöglichen eine gute Schubübertragung und minimieren die Gefahr eines erhöhten Verschleißes und einer erhöhten Abnutzung der Kette. Neben der im Wesentlichen senkrechten Ausbildung zur Kettenlängsachse, die sich bevorzugt auch durch die Gelenköffnungen der Kettenglieder erstreckt, sind auch andere abgestimmte Neigungswinkel für eine sichere Schubübertragung im gestreckten Zustand der Kette denkbar.

Für eine sichere und gleichmäßige Schubübertragung kann die Länge des Abstützabschnitts zwischen 30 % und 60 %, bevorzugt zwischen 40 % und 50 %, der Höhe des Innenkettenglieds senkrecht zur Kettenlängsachse entsprechen. Die Höhe des Innenkettenglieds entspricht dabei der Länge der Abstützkontur auf den Stirnseiten.

Eine Variante sieht vor, dass der Vorsprung und die Vertiefung der Abstützkontur gegenüber der Achse der Rückensteifen Kette versetzt angeordnet sind, wobei der Versatz bevorzugt 10 % bis 20 % der Stirnseitenhöhe des Kettenglieds beträgt. Die Versetzung des Vorsprungs bzw. der Vertiefung gegenüber der Kettenlängsachse in Biegerichtung verbessert die Biegefähigkeit der Kette. Dabei ist ein Versatz von 10 % bis 20 % der Stirnseitenhöhe des Kettenglieds senkrecht zur Kettenlängsachse geeignet ein optimiertes Verhältnis zwischen Biegefähigkeit und Verschiebeweg zu realisieren.

Eine besondere Ausgestaltung sieht vor, dass der Vorsprung und die Vertiefung sich keilförmig verjüngen und gemeinsam einen Keilpresssitz ausbilden. Die Merkmalskombination dieses Anspruchs 8 könnte auch unabhängig von einem der Ansprüche 1 bis 7 Schutz genießen und selbstständig weiterverfolgt werden. Dabei ist der Keilpresssitz bevorzugt als flächiger Kegelpresssitz ausgebildet mit einer selbsthemmenden Neigung zur Bildung eines Pressverbands zwischen Vorsprung und Vertiefung. Dies ermöglicht eine besonders gute Versteifung der Kette mit nur geringer Durchbiegung. Der Vorsprung verjüngt sich dabei in Steckrichtung und die Vertiefung verjüngt sich in Aufnahmerichtung. Der selbsthemmende Keilpresssitz ermöglicht im Gegensatz zu herkömmlichen rückensteifen Ketten eine Beibehaltung der Rückensteifigkeit selbst bei einer Aufhebung der Schubkraft und führt damit zu einer guten Steifigkeitswirkung der Kette nicht nur senkrecht zur Kettenlängsachse sondem bis zu einer gewissen Kraft auch in Laufrichtung, d.h. in Zugkraftrichtung. Durch den Keilpresssitz wird zur Auflösung der Rückensteifigkeit zunächst ein Überschreiten einer gewissen Zugkraft notwendig, wobei die Zugkraft zur Auflösung bevorzugt kleiner als die im Betrieb auftretende Zugkraft ist, insbesondere kleiner als die Hälfte der auftretenden Betriebskraft.

Um eine möglichst optimale Keilpresswirkung zu erreichen, können die Seitenflanken des Vorsprungs und der Vertiefung einen Keilwinkel von 1,5° bis 2,5°, insbesondere von ca. 2°, aufweisen. Dabei ist der Keilwinkel der Winkel zwischen jeweils einer Seitenflanke des Vorsprungs bzw. der Vertiefung und der Achse in Kettenlängsrichtung, so dass sich der Vorsprung bzw. die Vertiefung auf beiden Seiten jeweils um den Keilwinkel verjüngen.

Eine günstige Ausführungsform sieht vor, dass der Fußbereich der Vertiefung konvex ausgebildet ist und einen im Wesentlichen senkrecht zur Achse verlaufenden Abschnitt und einen relativ zum stirnseitigen Abstützabschnitt weiter vertieften Abschnitt aufweist. Diese Ausgestaltung ermöglicht einen optimalen Sitz, des Stecklappens in der Steckaufnahme bei einem gleichzeitigen guten und ruckfreien Löseverhalten, sowie eine optimale Biegefreiheit der Kette. Dabei sind sowohl der im Wesentlichen senkrecht zur Achse verlaufende Abschnitt als auch der weitervertiefte Abschnitt jeweils an den am Fußbereich angrenzenden Seitenflanken angeordnet, wobei der im Wesentlichen senkrechte Abschnitt dem Abstützabschnitt zugewandt ist. So kann der Abstand zwischen den konvex ausgebildeten Abschnitt und dem angrenzenden Gelenkbolzen in einem Bereich zwischen 40 % und 60 % des Gelenkbolzendurchmessers gehalten werden. Zur Verbesserung der Kraftverteilung kann sich dieser Abschnitt vom senkrechten Abstand aus innerhalb der Bereichsgrenzen zunehmend vergrößem.

Zweckmäßigerweise kann der Kopfbereich des Vorsprungs konkav ausgebildet sein und einen im Wesentlichen senkrecht zur Achse verlaufenden Abschnitt und ein relativ zum stirnseitigen Abstützabschnitt weiter vorstehenden Abschnitt aufweisen. Dies ermöglicht ein gutes Zusammenwirken mit dem entsprechend ausgestalteten Fußbereich der Aussparung.

Um bereits bei einer kleinen Ausrückbewegung eine Biegefähigkeit der rückensteifen Kette zu erreichen, kann die Abstützkontur der ersten Stirnseite auf der dem Abstützabschnitt gegenüberliegenden Seite der Vertiefung einen gegenüber dem Abstützabschnitt zurückversetzten Abschnitt aufweisen. Trotz des weiter vertieften Abschnitts des Fußbereichs der Aussparung kann so eine sehr kleine Ausrücklänge erreicht werden, beispielsweise zwischen 20 % und 50 %, bevorzugt ca. 35 %, des Gelenkbolzendruchmessers oder bei einem Gelenkbolzenabstand von ca. 12,5 mm unter 2 mm, bevorzugt ca. 1,5 mm. Durch den zurückversetzten Abschnitt sind die Seitenflanken der Vertiefung trotz eines konvex ausgebildeten Verlaufs des Fußbereichs ungefähr gleich lang. Diese Ausgestaltung ermöglicht weiter bereits bei einer relativ kleinen Längsbewegung der Kettenglieder zueinander ein Lösen der Versteifung und verhindert eine Berührung der Stirnseiten bei einer Biegung der Kette. Außerdem kann der Vorsprung trotz eines weit hervorstehenden Abschnitts bereits nach einer geringen Längsbewegung aus der Vertiefung herausgedreht werden.

Bevorzugt können die an den Abstützabschnitt angrenzenden oberen und unteren Seitenflanken der Vertiefung in etwa gleich lang sein. Dies ermöglich neben einer gleichmäßigen Seitenflankenbelastung beim Keilpresssitz ein einfaches ruckfreies Lösen und eine gute gleichmäßige Streckung der Kette.

Eine bevorzugte Ausgestaltung sieht vor, dass die Abstützkontur der ersten Stirnseite auf der dem Abstützabschnitt gegenüberliegenden Seite zwischen der Unterkante der Innenlasche und der Stirnseite einen abgeschrägten Abschnitt aufweist. Dieser abgeschrägte Abschnitt der Abstützkontur verhindert im auseinander gezogenen Zustand der Kette ein Berühren der ersten und zweiten Stirnseite selbst bei einem kleinen Verschiebeweg in Kettenlängsrichtung und einer großen Biegung von bis zu 90° zwischen zwei Innen- bzw. Außenkettengliedern.

Die vorliegende Erfindung bezieht sich weiter auf einen rückensteifen Kettenantrieb zum Antrieb von automatisierten Tor- oder Türantrieben mit einer der vorstehend beschriebenen rückensteifen Ketten und mindestens einem Kettenrad zum Antrieb der rückensteifen Kette. Dieser erfindungsgemäße rückensteife Kettenantrieb ermöglicht bei automatischen Tor- oder Türantrieben eine Schubübertragung durch die Kette ohne zusätzliche seitliche Führungen zum Öffnen oder Schließen des Tors bzw. der Tür. Dabei ist bei einer großen Biegung zwischen zwei Innen- bzw. Außenkettengliedern ein Durchmesser für das Kettenrad erreichbar, der zwischen dem drei- und vierfachen des Bolzenabstandes im gesteckten Zustand liegt, d.h. bei einem Gelenkbolzenabstand von ca. 12,5 mm ein Kettenraddurchmesser zwischen 37,5 mm und 50 mm, bevorzugt ca. 45 mm.

Im Folgenden wird ein Ausführungsbeispiel der vorliegenden Erfindung anhand einer Zeichnung näher erläutert. Es zeigen:

Fig. 1 eine Seitenansicht einer erfindungsgemäßen rückensteifen Kette,

Fig. 2a ein Schnitt durch die rückensteife Kette aus Fig. 1,

Fig. 2b einen Schnitt durch eine weitere Ausführungsform der rückensteifen Kette aus Fig. 1,

Fig. 3 eine vergrößerte Ansicht einer Innenlasche der rückensteifen Kette aus Fig. 1,

Fig. 4 eine Seitenansicht eines erfindungsgemäßen rückensteifen Kettenantriebs.

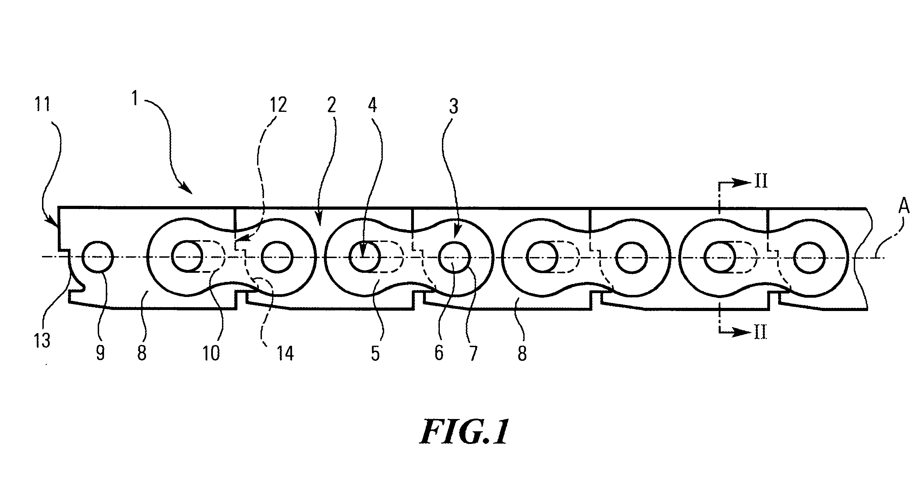

Die in Fig. 1 dargestellte rückensteife Kette 1 umfasst abwechselnd Innenkettenglieder 2 und Außenkettenglieder 3. Die Innenkettenglieder 2 und Außenkettenglieder 3 sind abwechselnd jeweils über ein Kettengelenk 4 schwenkbar miteinander verbunden. Die Außenkettenglieder 3 umfassen zwei im parallelen Abstand zueinander angeordnete Außenlaschen 5, die über einen senkrecht zu diesem angeordneten Gelenkbolzen 6 miteinander verbunden sind. Die Gelenkbolzen 6 erstrecken sich senkrecht zur Kettenlängsachse A durch die Öffnungen 7 in den Außenkettenlaschen 5 durch die Innenlasche 8 des Innenkettenglieds 2. Die Innenlasche 8 weist zwei Gelenköffnungen 9, 10 auf, durch die sich der Gelenkbolzen 6 hindurch erstreckt. Dabei ist die Gelenköffnung 9 kreisförmig ausgebildet, um den Gelenkbolzen 6 passend aufzunehmen, während die Gelenköffnung 10 als Langloch ausgebildet ist, um ein längsbewegliches Verschieben der Innenlasche 8 relativ zur mit dem zugehörigen Gelenkbolzen 6 verbundenen Außenlasche 5 sowie der angrenzenden Innenlasche 8 zu ermöglichen. Die Innenlasche 8 ist weiter mit zwei stirnseitigen Abstützkonturen 11, 12 versehen, die in dem in Fig. 1 gezeigten zusammengesteckten Zustand der rückensteifen Kette 1 neben einander liegend angeordnet sind. Dabei ist die Abstützkontur 11 auf der ersten Stirnseite der Innenlasche 8 mit einer Vertiefung 13 versehen, während die Abstützkontur 12 auf der zweiten Stirnseite der Innenlasche 8 mit einem in diese Vertiefung 13 passenden Vorsprung 14 ausgebildet ist.

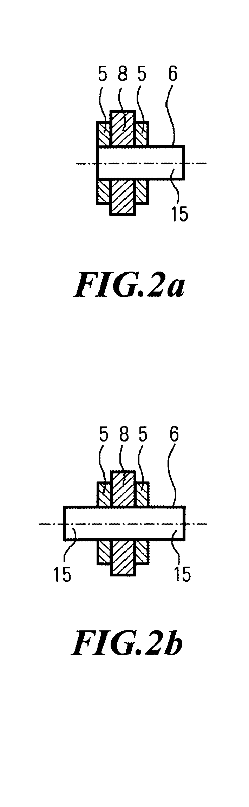

Fig. 2a zeigt einen Schnitt durch die erfindungsgemäße rückensteife Kette 1, bei der der Gelenkbolzen 6 nur an einer Seite der Außenlaschen 5 des Außenkettenglieds 3 übersteht. Der Überstand 15 des Bolzens 6 kann zum Antrieb der rückensteifen Kette 1 in ein entsprechend ausgebildetes Kettenrad 24 eingreifen, wobei der Zahnabstand dem Abstand der Gelenkbolzen 6 im auseinandergezogenen Zustand entspricht. Demgegenüber zeigt Fig. 2b eine Ausführungsform der rückensteifen Kette 1, bei der der Gelenkbolzen 6 auf beiden Seiten des Außenkettenglieds 3 über die Außenlaschen 5 übersteht. Auch hier kann der Überstand 15 auf beiden Seiten des Außenkettenglieds 3 durch ein entsprechendes Kettenrad erfasst werden. Dabei ist sowohl ein einseitiger Eingriff, als auch ein Eingriff auf beiden Seiten des Außenkettenglieds 2 durch ein spezielles Kettenrad mit zwei Zahnrädern sowie einem Abstand zwischen den Zahnrädern in der die rückensteife Kette 1 geführt ist, möglich.

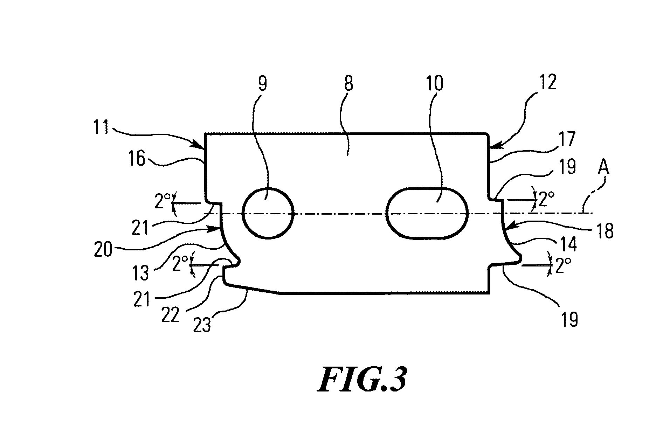

Die Abstützkontur 11 auf der ersten Stirnseite der Innenlasche 8 und die Abstützkontur 12 auf der zweiten Stirnseite der Innenlasche 8 sind passend zueinander ausgestaltet. Wie in Fig. 3 gezeigt, weist die Abstützkontur 11 einen Abstützabschnitt 16 auf, der in der gezeigten Ausführungsform vollständig oberhalb der Kettenlängsachse 8 und senkrecht zu dieser angeordnet ist. Dementsprechend ist auch bei der Abstützkontur 12 ein weiterer Abstützabschnitt 17 vorgesehen, der im zusammengesteckten Zustand der rückensteifen Kette 1 mit dem Abstützabschnitt 16 der ersten Stirnseite der nächsten Innenlasche 8 zusammenwirkt, um die Schubübertragung zu gewährleisten. Der Vorsprung 14 verjüngt sich in Richtung des Kopfbereichs 18, wobei die Seitenflanken 19 jeweils um ca. 2° gegenüber der Richtung der Kettenlängsachse 8 geneigt sind. Der Kopfbereich 18 ist konkav ausgebildet und erstreckt sich von einem senkrecht zur Kettenlängsachse 8 verlaufenden Abschnitt, der dem Abstützabschnitt 17 nahe liegt, zu einem relativ zum Abstützabschnitt 17 weiter vorstehenden unteren Abschnitt, wobei die äußerste Spitze abgerundet ist. Dadurch sind die obere und untere Seitenflanke 19 des Vorsprungs 14 unterschiedlich lang ausgebildet. Die Vertiefung 13 der Abstützkontur 11 auf der ersten Stirnseite der Innenlasche 8 weist einen konvex ausgebildeten Fußbereich 20 auf, wobei hier korrespondierend zu dem Vorsprung 14 ein oberer senkrecht verlaufender Abschnitt und ein relativ zum Abstützabschnitt 16 weiter vertiefter Abschnitt vorhanden sind. Ebenso ist auch die Vertiefung 13 keilförmig ausgebildet, wobei sich die Seitenflanken 21 wieder mit einem Keilwinkel von ca. 2° auf beiden Seiten der Vertiefung 13 verjüngen. Anders als beim Vorsprung 14 sind jedoch die Seitenflanken 21 der Vertiefung in etwa gleich lang ausgebildet, um ein gleichmäßiges Steckverhalten zu ermöglichen. Dazu ist der unterste Abschnitt 22 der Abstützkontur 11 gegenüber dem Abstützabschnitt 16 zurückversetzt. Ergänzend ist das äußerste Ende 23 der Abstützkontur 11 unterhalb der Vertiefung 13 gegenüber der Unterkante der Innenlasche 8 abgeschrägt, um die Bewegungsfähigkeit der rückensteifen Kette 1 so groß wie möglich gestalten zu können, ohne die als Langloch ausgebildete Gelenköffnung 10, die sich in Längsrichtung der Kettenlängsachse A auf der Innenlasche 8 befindet, übermäßig groß dimensionieren zu müssen.

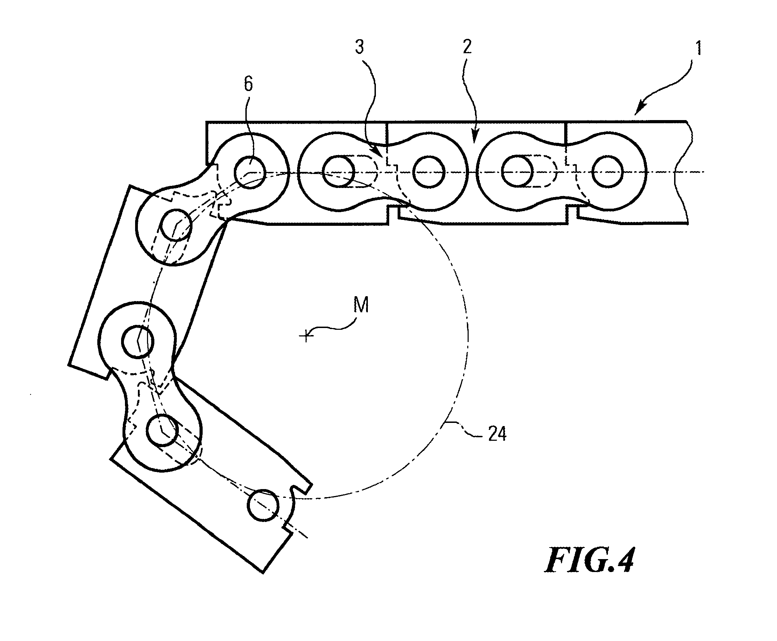

Fig. 4 zeigt eine rückensteife Kette 1, die um ein sich um den Mittelpunkt M drehendes Kettenrad 24 herumgeführt ist und im Eingriffsbereich des Kettenrads 24 auseinander gezogen ist. Dabei stehen die Gelenkbolzen 6 mit den Zähnen (nicht gezeigt) des Kettenrads 24 in Kontakt, und ermöglichen eine Herumführung der auseinander gezogenen Kette 1 um das Kettenrad 24, wobei durch die gute Beweglichkeit der Kette ein sehr kleiner Radius möglich ist.

Im Folgenden wird nunmehr, insbesondere anhand der Figuren 1 und 5, die Wirkungsweise der rückensteifen Kette 1 näher erläutert.

Bei der erfindungsgemäßen rckensteifen Kette 1 wechseln sich ineinander gesteckte Innenlaschen 8 mit nicht gesteckten Außenlaschen 5 ab, wobei die Abstützkontur 11, 12 der Innenlaschen 8 jeweils außerhalb der beiden zu diesem Kettengelenk zugehörigen Gelenkbolzen 6 liegt. Entsprechend sind die Abstützkonturen 11 und 12 zweier nebeneinander liegender Innenkettenglieder 2 zwischen den das zugehörige Außenkettenglied 3 mit den entsprechenden Innenkettengliedem 2 verbindenden Gelenkbolzen 6 angeordnet.

Fig. 1 zeigt die rückensteife Kette 1 in einem zusammengeschobenen, rückensteifen Zustand, bei dem der konisch ausgebildete Vorsprung 14 in die konische Vertiefung 13 vollständig eingefahren ist und die Abstützabschnitte 16, 17 sich berühren. Dabei erfolgt die Schubübertragung bei der versteiften Kette im Wesentlichen über die sich berührenden Abstützabschnitte 16, 17. Demgegenüber wird die Rückensteifigkeit der Kette 1 im Wesentlichen durch die in Form eines Stecklappens in einer Steckaufnahme zusammengefügten Vorsprungs 14 und Vertiefung 13 ausgebildet.

Die Seitenflanken 19, 21 des Vorsprungs 14 bzw. der Vertiefung 13 verjüngen sich keilförmig in Steckrichtung des Vorsprungs 14 bzw. in der Aufnahmerichtung der Vertiefung 13 und bilden gemeinsam einen selbsthemmenden Keilpresssitz aus, der im zusammengesteckten Zustand auch im Falle einer Aufhebung der Schubkraft sich nicht selbsttätig löst sondern erst nachdem eine bestimmte Zugkraft überschritten worden ist.

Beim Überschreiten einer bestimmten Zugkraft, beispielsweise durch den Eingriff eines Kettenrads 24 in die vorstehenden oder mittig zwischen zwei Innenlaschen 8 geführten Gelenkbolzen 6, wird auf die selbstgehemmten Steckverbindung zwischen Vorsprung 14 und Vertiefung 13 eine Zugkraft ausgeübt, durch die sich der Keilpresssitz löst und ein längsbewegliches Verschieben der Kettenglieder zueinander entlang der als Langloch ausgebildeten Gelenköffnung 10 ermöglicht. Im auseinander gezogenen Zustand lässt sich die rückensteife Kette 1 in einem engen Radius um ein Kettenrad 24 führen, da die Abstützkontur 11 unterhalb der Vertiefung 13 einen zurückversetzen Abschnitt 22 aufweist und das äußerste Ende 23 der Abstützkontur 11 zur Unterseite der Innenlasche 8 abgeschrägt ist. Neben der guten Biegefähigkeit der auseinandergezogenen Kette 1 hat der zurückversetzte Abschnitt 22 der Abstützkontur 11 die Wirkung, dass die Seitenflanken 21 der Vertiefung 13 in etwa gleich lang sind, so dass sich eine gleichmäßige Steckverbindung mit dem Vorsprung 14 ausbilden kann. Weiter ist dadurch auch der Entriegelungsweg beim Auseinanderziehen der nebeneinander liegenden Innenlaschen 8 relativ klein gehalten, so dass diese Innenlaschen 8 zueinander beweglich sind, bevor der gesamte Ausrückweg zwischen den seitlichen Grenzen des Langlochs 10 zurückgelegt ist.

## Patentansprüche

1. Rückensteife Kette (1) mit einander abwechselnden Kettengliedern (2,3) die jeweils über ein Kettengelenk (4) miteinander verbundenen sind, jedes Kettengelenk (4) umfasst einen Gelenkbolzen (6) und mindestens eine Gelenköffnung (7,9,10) durch die sich der Gelenkbolzen (6) erstreckt, jedes zweite Kettenglied (2,3) weist an den Stirnseiten in Kettenlaufrichtung eine mit jeweils einem zweiten Kettenglied (2,3) in Berührung bringbare Abstützkontur (11,12) auf, wobei die Abstützkontur (11) der ersten Stirnseite eine Vertiefung und die Abstützkontur (12) der zweiten Stirnseite einen in diese Vertiefung (13) passenden Vorsprung (14) aufweist,
**dadurch gekennzeichnet, dass** bei jedem zweiten Kettenglied (2,3) mindestens eine der Gelenköffnungen (7,9,10) zum längsverschieblichen Bewegen des Kettenglieds (2,3) als Langloch (10) ausgebildet ist, und die Vertiefung (13) an der ersten Stirnseite als Steckaufnahme und der Vorsprung (14) an der zweite Stirnseite als Stecklappen ausgestaltet ist.

2. Rückensteife Kette (1) nach Anspruch 1,
**dadurch gekennzeichnet, dass** der Gelenkbolzen (6) an mindestens einer Seite der Kettenglieder (2,3) zum Eingriff in ein Kettenrad (24) vorsteht.

3. Rückensteife Kette (1) nach Anspruch 1 oder 2,
**dadurch gekennzeichnet, dass** die sich einander abwechselnden Kettenglieder (2,3) als Innenkettenglied (2) und Außenkettenglied (3) ausgebildet sind, wobei das Außenkettenglied (3) zwei Außenlaschen (5) und zwei sich durch die Außenlaschen (5) erstreckende Gelenkbolzen (6) umfasst.

4. Rückensteife Kette (1) nach Anspruch 3,
**dadurch gekennzeichnet, dass** das Innenkettenglied (2) mindestens eine Innenlasche (8) umfasst, wobei die Innenlasche (8) die Abstützkontur (11,12) aufweist und mindestens eine Gelenköffnung (9,10) der Innenlasche (8) als Langloch ausgebildet ist.

5. Rückensteife Kette (1) nach einem der Ansprüche 1 bis 4,
**dadurch gekennzeichnet, dass** die Abstützkontur (11,12) einen Abstützabschnitt (16,17) aufweist, wobei der Abstützabschnitt (16,17) auf der ersten und zweiten Stirnseite bevorzugt jeweils im wesentlichen senkrecht zur Achse (A) der rückensteifen Kette (1) angeordnet ist.

6. Rückensteife Kette (1) nach Anspruch 5,
**dadurch gekennzeichnet, dass** die Länge des Abstützabschnitts (16,17) zwischen 30 % und 60 %, bevorzugt zwischen 40 % und 50 %, der Höhe des Innenkettenglieds (8) entspricht.

7. Rückensteife Kette (1) nach einem der Ansprüche 1 bis 6,
**dadurch gekennzeichnet, dass** der Vorsprung (14) und die Vertiefung (13) der Abstützkontur (11,12) gegenüber der Achse (A) der rückensteifen Kette versetzt angeordnet sind, wobei der Versatz bevorzugt 10 % bis 20 % der Stirnseitenhöhe des Kettenglieds (2,3) beträgt.

8. Rückensteife Kette (1) nach einem der Ansprüche 1 bis 7,
**dadurch gekennzeichnet, dass** der Vorsprung (14) und die Vertiefung (13) sich keilförmig verjüngen und gemeinsam einen Keilpresssitz ausbilden.

9. Rückensteife Kette (1) nach Anspruch 8,
**dadurch gekennzeichnet, dass** die Seitenflanken (19,21) des Vorsprungs (14) und der Vertiefung (13) einen Keilwinkel von 1,5 ° bis 2,5 °, insbesondere von ca. 2 °, aufweisen.

10. Rückensteife Kette nach einem der Ansprüche 5 bis 9,
**dadurch gekennzeichnet, dass** der Fußbereich (20) der Vertiefung (13) konvex ausgebildet ist und einen im wesentlich senkrecht zu Achse (A) verlaufenden Abschnitt und einen relativ zum stirnseitigen Abstützabschnitt weiter vertieften Abschnitt aufweist.

11. Rückensteife Kette (1) nach einem der Ansprüche 5 bis 10,
**dadurch gekennzeichnet, dass** der Kopfbereich (18) des Vorsprungs (14) konkav ausgebildet ist und einen im wesentlich senkrecht zur Achse verlaufenden Abschnitt und einen relativ zum stirnseitigen Abstützabschnitt weiter vorstehenden Abschnitt aufweist.

12. Rückensteife Kette (1) nach einem der Ansprüche 5 bis 11,
**dadurch gekennzeichnet, dass** die Abstützkontur (11) der ersten Stirnseite auf der dem Abstützabschnitt (16) gegenüber liegenden Seite der Vertiefung (13) einen gegenüber dem Abstützabschnitt (16) zurückversetzten Abschnitt (22) aufweist.

13. Rückensteife Kette (1) nach einem der Ansprüche 5 bis 12,
**dadurch gekennzeichnet, dass** die an den Abstützabschnitt (16) angrenzenden oberen und unteren Seitenflanken (21) der Vertiefung (13) in etwa gleich lang sind.

14. Rückensteife Kette (1) nach einem der Ansprüche 1 bis 12,
**dadurch gekennzeichnet, dass** die Abstützkontur der ersten Stirnseite auf der dem Abstützabschnitt (16) gegenüberliegenden Seite zwischen der Unterkante der Innenlasche und der Stirnseite einen abgeschrägten Abschnitt (23) aufweist.

15. Rückensteifer Kettenantrieb zum Antrieb von automatisierten Tor- oder Türantrieben mit einer rückensteifen Kette (1) nach einem der Ansprüche 1 bis 14 und mindestens einem Kettenrad (24) zum Antrieb der rückensteifen Kette (1).
